# EUROPÄISCHE PATENTSCHRIFT

(11) **EP 2 401 489 B1**
(45) Veröffentlichungstag und Bekanntmachung des Hinweises auf die Patenterteilung: **25.07.2012**
(21) Anmeldenummer: 10705879.4
(22) Anmeldetag: 26.02.2010
(51) Int. Cl.: F02B 23/06, F16J 1/09

(54) **OTTOMOTOR MIT EINEM KOLBEN MIT MULDE**
OTTO MOTOR COMPRISING A PISTON HAVING A DEPRESSION
MOTEUR OTTO COMPRENANT UN PISTON POURVU D'UNE CAVITE

(30) Priorität: 26.02.2009 DE 102009010729
(43) Veröffentlichungstag der Anmeldung: 04.01.2012
(73) Patentinhaber: 2G Energietechnik GmbH, 48619 Heek (DE)
(72) Erfinder: HERDIN, Ruediger, A-1060 Wien (AT)
(74) Vertreter: Liedtke, Markus
(86) Internationale Anmeldenummer: PCT/EP2010/052515
(87) Internationale Veröffentlichungsnummer: WO 2010/097475

(56) Entgegenhaltungen:
- DE-A1- 19 649 052
- JP-A- 52 006 809
- US-A- 3 144 008
- US-A- 5 103 784
- US-A1- 2005 115 538
- US-E1- R E37 714

## Beschreibung

Die vorliegende Erfindung bezieht sich auf einen Ottomotor mit einem Kolben nach den Merkmalen des Oberbegriffs des Anspruchs 1. Insbesondere bezieht sich die Erfindung auf die Ausgestaltung einer brennraumseitigen Oberfläche des Kolbens, die eine Mulde und eine oder mehrere Ausbuchtungen aufweist.

In Verbrennungsmotoren werden Kolben benutzt, um die nötige Verdichtung von Luft oder eines Kraftstoffluftgemisches herbeizuführen. Im Fall der Luftverdichtung wird dann der Kraftstoff in den Brennraum eingespritzt. In dem Brennraum befindet sich dann ein Gemisch aus Kraftstoff und Luft, welches sich nach der vorgegebenen Kompression entzündet. Dies kann sowohl fremdgezündet, z.B. durch eine Zündkerze als auch selbstzündend geschehen.

Dabei ist es besonders wichtig, dass die Verbrennung optimiert abläuft, d.h. mit einer hohen Effizienz, geringem Verbrauch und ohne schädliche Nebeneffekte, wie zum Beispiel Klopfen oder Selbstzündung. Ein plötzlicher, steiler Druckanstieg ist die Folge und führt zu hoher mechanischer Belastung. Durch diese Nebeneffekte kann z.B. der Motor beschädigt werden und dessen Lebenszeit verkürzt werden. Deshalb ist es wichtig, dass eine definierte Verbrennung statt findet.

Parameter für die kontrollierte Verbrennung sind unter Anderem die Verbrennungstemperatur, die Verdichtung, die Zeitdauer der Verbrennung, und der gleichmäßige Ablauf der Verbrennung. Diese Parameter und damit auch die Klopf- oder Selbstszündungseigenschaften lassen sich durch verschiedene Techniken beeinflussen, z.B. durch Anreichern der Kraftstoffzufuhr, durch einen klopffesten Kraftstoff oder durch das Einspritzen von kühlenden Substanzen. Dennoch ist es wünschenswert, neben der Qualität auch die Effizienz der Vorgänge im Brennraum weiter zu steigern, um z.B. einen sparsamen Kraftstoffverbrauch zu begünstigen, oder den Motor vor Beschädigungen und Langzeitschäden zu schützen.

Aus dem Stand der Technik ist, wie in der US 5,103,784 beschrieben, ein Kolben eines Verbrennungsmotors bekannt, welcher in einer brennraumseitigen Oberfläche eine Mulde mit mindestens einer Ausbuchtung am Muldenrand aufweist.

Der Erfindung liegt somit die Aufgabe zu Grunde einen Kolben derart weiterzuentwickeln, dass er die Nachteile des Stands der Technik überwindet, insbesondere die Verbrennung in einem Brennraum eines Kolbens effizienter gestaltet, den Brennvorgang beschleunigt und das Kraftstoff-Luft-Gemisch vor der Verbrennung homogenisiert.

Die Aufgabe wird erfindungsgemäß durch einen Ottomotor mit einem Kolben gelöst, welcher eine brennraumseitige Oberfläche aufweist, wobei in der Oberfläche eine Mulde mit einem Muldenrand und einem Muldenboden angeordnet ist, wobei die Mulde eine maximale Tiefe tₘₐₓ in axialer Richtung des Kolbens gemessen von der brennraumseitigen Oberfläche aufweist, und wobei sich mindestens eine Ausbuchtung von einem Abschnitt des Muldenrandes aus erstreckt und eine maximale Tiefe tₐᵤₛ aufweist, wobei die Tiefe tₐᵤₛ der Ausbuchtung in axialer Richtung des Kolbens kleiner als die Tiefe der Mulde tₘₐₓ ist.

Erfindungsgemäß umfasst die mindestens eine Ausbuchtung einen Ausbuchtungsboden, wobei der Ausbuchtungsboden oder die Kante zwischen dem Muldenrand und der mindestens einen Ausbuchtung gegenüber einer Ebene senkrecht zur axialen Richtung des Kolbens um einen Neigungswinkel geneigt ist. Die maximale Tiefe der mindestens einen Ausbuchtung tₐᵤₛ erreicht erfindungsgemäß zwischen 45% und 55% der maximalen Tiefe tₘₐₓ der Mulde und der Muldenboden ist erfindungsgemäß in radialer Richtung zur Mitte des Muldenbodens hin weniger tief als in radialer Richtung zum äußeren Muldenrand hin.

In einer bevorzugten Ausführungsform, sind mindestens zwei Ausbuchtungen in der brennraumseitigen Oberfläche angeordnet.

Nach einem weitern, bevorzugten Aspekt sind in der brennraumseitigen Oberfläche mindestens drei Ausbuchtungen angeordnet.

Bei einer weiteren, nicht erfindungsgemäßen Ausführungsform beträgt die maximale Tiefe der mindestens einen Ausbuchtung tₐᵤₛ zwischen 30% und 70%, insbesondere zwischen 40% und 60% der maximalen Tiefe tₘₐₓ der Mulde.

Eine weitere Ausführung der vorliegenden Erfindung zeigt einen im Wesentlichen kreisförmigen Muldenrand in der brennraumseitigen Oberfläche.

Nach einem Aspekt der vorliegenden Erfindung ist die Mulde im Wesentlichen konzentrisch zum äußeren Rand der brennraumseitigen Oberfläche ausgebildet.

Nach einem anderen Aspekt, ist die Mulde im Wesentlichen exzentrisch zum äußeren Rand der brennraumseitigen Oberfläche ausgebildet.

In einer weiteren Ausführungsform weist der Kolben mindestens eine erste Beschleunigungskante für den Anteil der Squishströmung zwischen der brennraumseitigen Oberfläche und der mindestens einen Ausbuchtung und mindestens eine zweite Beschleunigungskante zwischen der mindestens einen Ausbuchtung und der Mulde auf. Dabei bezeichnet die Squishströmung die Strömung von der Kolbenoberfläche zu der Ausbuchtung, bzw. zu der Mulde kurz vor Erreichen des oberen Totpunkts.

Nach einem weiteren Aspekt der vorliegenden Erfindung, weist der Muldenboden einen im Wesentlichen kegelförmigen Bereich aufweist.

In einer weiteren Ausführungsform ist der im Wesentlichen kegelförmige Bereich der Mulde im Wesentlichen konzentrisch zur Mulde angeordnet.

Nach einer Ausführungsform weist der Kolben eine Kolbenmantelfläche auf, die eine Ringnut umfasst, die dafür ausgelegt ist, einen Ringträger für einen Kolbenring aufzunehmen. Dabei ist in dieser Ausführungsform die mindestens eine Ausbuchtung in radialer Richtung durch die Ringnut begrenzt.

Bei einer Ausführungsform ist die Ausbuchtung, insbesondere der Rand der Ausbuchtung, in einem Abstand von mind. 1 mm von dem Ringträger angeordnet.

Eine Ausführungsform der vorliegenden Erfindung sieht eine Gestaltung der mindestens einen Ausbuchtung vor, so dass die Form der mindestens einen Ausbuchtung im Wesentlichen kreissegmentförmig ist.

Nach einem Aspekt der vorliegenden Erfindung wird der Kolben in einem Verbrennungsmotor genutzt, der ein Gasmotor ist.

Nach einem weiteren, nicht erfindungsgemäßen Aspekt kann der Verbrennungsmotor ein selbstzündender Motor sein.

Eine Ausführungsform der vorliegenden Erfindung ist so gestaltet, dass das Verhältnis zwischen der Summe aller Abschnitte des Muldenrands, von denen sich eine Ausbuchtung erstreckt und dem gesamten Muldenrand zwischen 30% und 70%, insbesondere zwischen 40% und 60%, bevorzugterweise zwischen 45% und 55% liegt.

Eine weitere Ausführungsform stellt das Verhältnis zwischen einem Abschnitt des Muldenrands, von dem sich eine Ausbuchtung erstreckt und dem gesamten Muldenrand dar. Das Verhältnis kann demnach zwischen 10% und 70%, insbesondere zwischen 15% und 50%, bevorzugterweise zwischen 20% und 30% liegen.

Der Erfindung liegt somit die Erkenntnis zugrunde, dass die erfindungsgemäße Ausgestaltung der brennraumseitigen Oberfläche des Kolbens sowohl eine schnelle Verbrennung des Luft-Kraftstoff-Gemisches begünstigt als auch Klopfen verhindert und somit eine maximale Energieausbeute unterstützt. Weiterhin ist der durch die Gestaltung der brennraumseitigen Oberfläche erwirkte hohe Turbulenzgrad des Gemisches vorteilhaft, um die Durchmischung der einzelnen Komponenten, also insbesondere von Luft und Kraftstoff unmittelbar vor der Verbrennung zu erhöhen. Dabei hilft eine homogene Durchmischung von Luft und Kraftstoff im gesamten Brennraum, die Verbrennung über den Brennraum gleichmäßig und schnell statt finden zu lassen.

Insbesondere ermöglichen eine oder mehrere Beschleunigungskanten in der brennraumseitigen Oberfläche des Kolbens eine gute Durchmischung des Luft-Kraftstoff-Gemischs. Durch die Beschleunigungskanten wird die Verteilung (Homogenität) des Kraftstoff-Luft-Gemisches über den gesamte Brennraum verbessert, so dass keine Über- oder Unterkonzentrationen des Gemisches im Brennraum auftreten. Dadurch wird gewährleistet, dass die Verbrennung sehr kontrolliert im Brennraum abläuft. Das Kraftstoff/Luftgemisch strömt über die Beschleunigungskanten, wodurch unterschiedliche Geschwindigkeiten des Kraftstoffes an der brennraumseitigen Oberfläche erreicht werden. Dadurch wird die Turbulenz im Brennraum deutlich erhöht und eine bessere Durchmischung des Kraftstoffs mit der Luft erreicht.

Ein weiterer Aspekt der vorliegenden Anmeldung ist durch die oben erwähnten Effekte, wie homogene Verteilung des Kraftstoff-Luft-Gemisches und erhöhter Turbulenzgrad, unmittelbar vor der Entzündung gegeben. Die schnellere Verbrennung erlaubt auch eine höhere Kompression, im Vergleich zu bekannten Ausführungen von Kolbenmulden wird ein höherer Wirkungsgrad erzielt und somit die Energieausbeute noch weiter optimiert.

Weitere vorteilhafte Ausführungsformen, Ausgestaltungen und Aspekte, der vorliegenden Erfindung ergeben sich aus den abhängigen Patentansprüchen, der Beschreibung und den beiliegenden Zeichnungen.

Es zeigen:

Figur 1a eine schematische Seitenansicht eines Kolbens;

Fig. 1b eine vergrößerte Ansicht eines Querschnitts einer Kolbenringnut;

Fig. 1c eine vergrößerte Ansicht eines Querschnitts einer Kolbenringnut mit Ringträger;

Figur 2 eine Draufsicht einer brennraumseitigen Kolbenoberfläche nach einer Ausführungsform der vorliegenden Erfindung;

Figur 3 eine schematische Schnittansicht des Kolbens aus Figur 2;

Figur 4 eine Draufsicht einer brennraumseitigen Kolbenoberfläche nach weiteren Ausführungsformen der vorliegenden Erfindung;

Figur 5 eine Draufsicht einer weiteren brennraumseitigen Kolbenoberfläche nach Ausführungsformen der vorliegenden Erfindung;

Figur 6a eine Draufsicht einer brennraumseitigen Kolbenoberfläche nach weiteren Ausführungsformen der vorliegenden Erfindung;

Figur 6b eine vergrößerte Ansicht eines Ausschnittes aus Figur 6a;

Figur 7 eine Draufsicht einer brennraumseitigen Kolbenoberfläche nach einer anderen Ausführungsform der vorliegenden Erfindung

Figur 8a eine Draufsicht einer brennraumseitigen Kolbenoberfläche nach weiteren Ausführungsformen der vorliegenden Erfindung;

Figur 8b eine vergrößerte Schnittansicht der brennraumseitigen Kolbenoberfläche aus Figur 8a;

Figur 9 zeigt eine schematische perspektivische Ansicht einer brennraumseitigen Teils eine Kolbens gemäß weiteren Ausführungsformen der Erfindung;

Figur 10 zeigt eine schematische Ansicht eines Kolbens mit gekippten Ausbuchtungen gemäß weiteren Ausführungsformen der Erfindung;

Figur 11 zeigt eine Projektion zur Illustration der Neigung der Ausbuchtungen gemäß noch weiteren Ausführungsformen der Erfindung; und

Figur 12 eine Draufsicht einer brennraumseitigen Kolbenoberfläche nach weiteren Ausführungsformen der vorliegenden Erfindung.

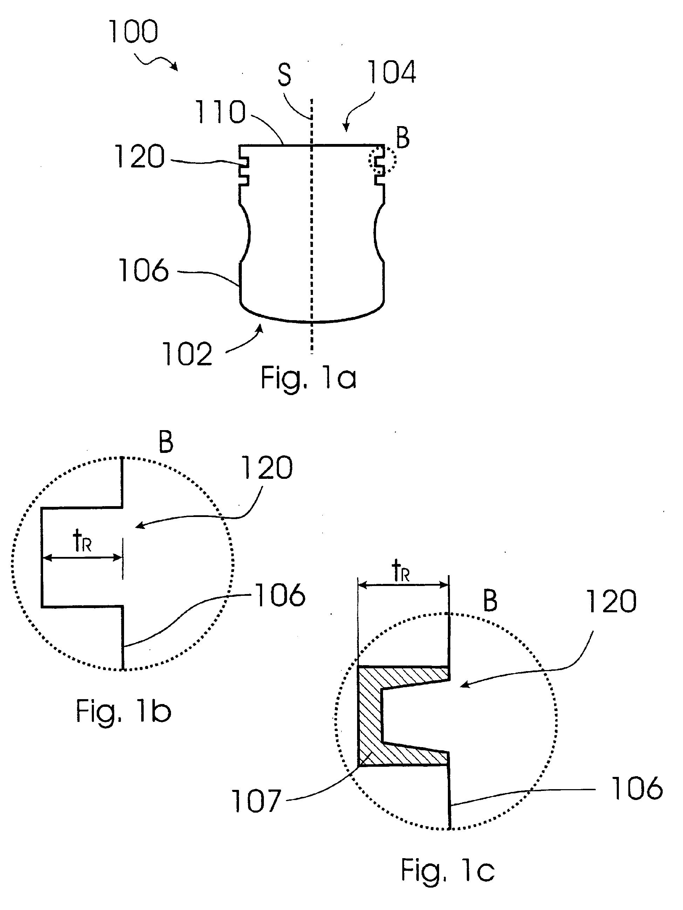

Fig. 1a zeigt eine schematische Seitenansicht eines Kolbens 100 für einen Verbrennungsmotor. Der Kolben 100 ist dazu eingerichtet, in einem Zylinder eines Verbrennungsmotors eingesetzt zu werden. Der Kolben 100 ist im Wesentlichen zylinderförmig mit einer axialen Achse S geformt und weist ein erstes Ende 102, an dem beispielsweise eine Kolbenstange befestigt werden kann, und ein zweites Ende 104 auf, das dem Brennraum des Zylinders zugewandt ist, und an dem eine brennraumseitige Oberfläche 110 angeordnet ist. Der Kolben umfasst ferner eine Mantelfläche 106 zwischen dem ersten und dem zweiten Ende 102, 104 des Kolbens. In einer Ausführungsform des Kolbens sind in der Mantelfläche 102 des Kolbens 100 ein oder mehrere umlaufende Ringnuten 120 angeordnet, die dafür ausgelegt sind, im montierten Zustand Kolbenringe aufzunehmen. Die Ringnuten können, z.B. aus Gründen der Festigkeit, mit einem zusätzlichen Material, zum Beispiel mit einem Ringträger verstärkt sein, dessen Material sich von dem Material des Kolbens selbst unterscheidet. Beispielsweise können die Kolbenringnuten mit einem Material, wie zum Beispiel Grauguss oder keramischen Faserverstärkungen verstärkt sein.

Fig. 1b zeigt einen vergrößerten Ausschnitt B aus Fig. 1a von einer Ringnut 120. Die Ringnut 120 weist eine Tiefe t_{R} in radialer Richtung von der Mantelfläche 106 auf. Im montierten Zustand werden in die Ringnuten, bzw. in die Ringträger Kolbenringe eingesetzt, die der Abdichtung, der Dosierung des Schmieröls und der Ableitung der Verbrennungswärme dienen.

Fig. 1c zeigt eine andere Ausführungsform der Ausschnittes B aus Fig. 1a. In der Ringnut 120 ist ein Ringträger 107 angeordnet, der aus einem verstärkenden Material angefertigt sein kann und der dafür ausgelegt ist, einen Kolbenring aufzunehmen. Im Fall, dass ein Ringträger 107 in der Ringnut 120 vorhanden ist, bezieht sich die Tiefe t_{R} auf die Tiefe des Ringträgers 107 in radialer Richtung nach innen, wie in Fig. 1c zu sehen ist.

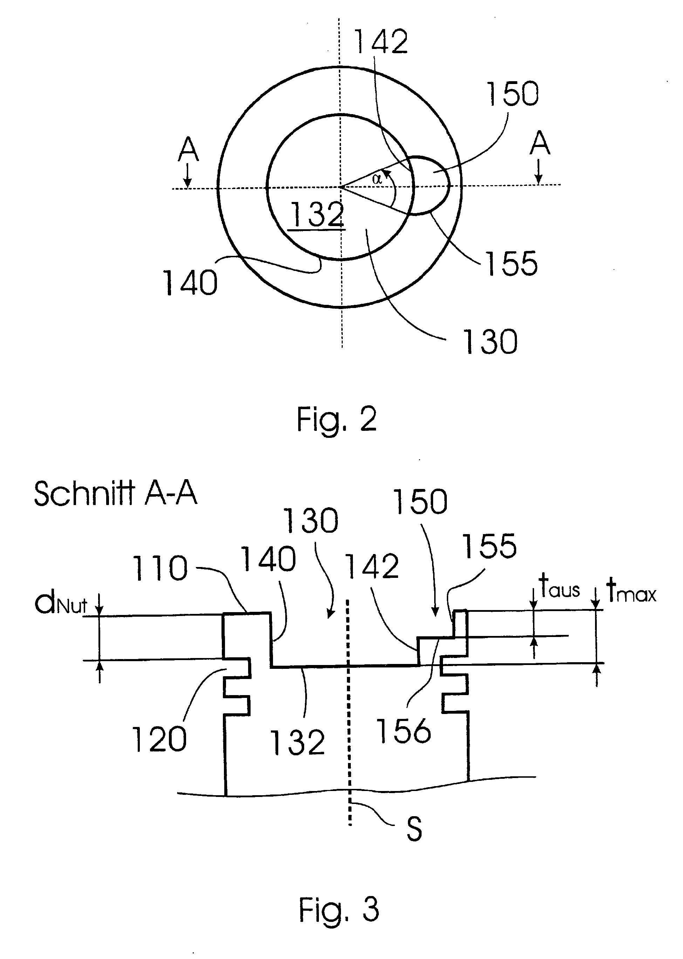

Figur 2 zeigt eine schematische Draufsicht auf die brennraumseitige Oberfläche 110. Dabei weist die Oberfläche 110 eine Mulde 130 mit einem Muldenrand 140 und eine sich von dem Muldenrand aus erstreckende Ausbuchtung 150 mit einem Ausbuchtungsrand 155 auf. Die Kante des Ausbuchtungsrandes 155 kann auch als eine Beschleunigungskante bezeichnet werden. Die Ausbuchtung 150 ist an einem Abschnitt 142 des Muldenrandes 140 angeordnet. In einer Ausführungsform kann die Ausbuchtung 150 die Form eines Ellipsenabschnittes aufweisen.

Ein Abschnitt eines Muldenrandes ist in diesem Zusammenhang als ein Teil oder ein Teilbereich des Muldenrandes zu verstehen. Ist der Muldenrand zum Beispiel kreisförmig, kann der Abschnitt 142 ein Kreisbogen mit einem beliebigen Winkel α sein. Ein Abschnitt kann jedoch auch über einen Anteil des Umfanges des Muldenrandes definiert werden. Ist die Mulde beispielsweise ellipsenförmig, kann eine Ausbuchtung zum Beispiel an 25% des Muldenrands angrenzen, der dem Umfang der Ellipse entspricht.

Gemäß Ausführungsformen der vorliegenden Erfindung, die mit anderen Ausführungsformen kombiniert werden können, kann die Form der Ausbuchtung im Wesentlichen vorzugsweise kreisförmig, kreissegmentförmig, oder elliptisch sein, oder jede andere Form aufweisen.

Typischerweise kann auch die Muldenform variieren, je nach Anwendungs- und Einsatzgebiet des entsprechenden Kolbens. In Figur 2 ist die Mulde 130 beispielweise kreisförmig, sie kann aber auch im Wesentlichen im Wesentlichen ellipsenförmig sein oder eine andere Form aufweisen.

Fig. 3 zeigt den Querschnitt A-A des Kolbens 100 aus Fig. 2. Die Mulde 130 umfasst einen Muldenboden 132, wobei der Muldenboden 132 eine Tiefe tₘₐₓ gegenüber der brennraumseitigen Oberfläche 110 aufweist. Die Ausbuchtung 150 mit dem Ausbuchtungsboden 156, die sich von dem Muldenrand 140, insbesondere von einem Abschnitt 142 des Muldenrandes 140 aus erstreckt, weist hingegen eine geringere Tiefe tₐᵤₛ gegenüber der brennraumseitigen Oberfläche auf.

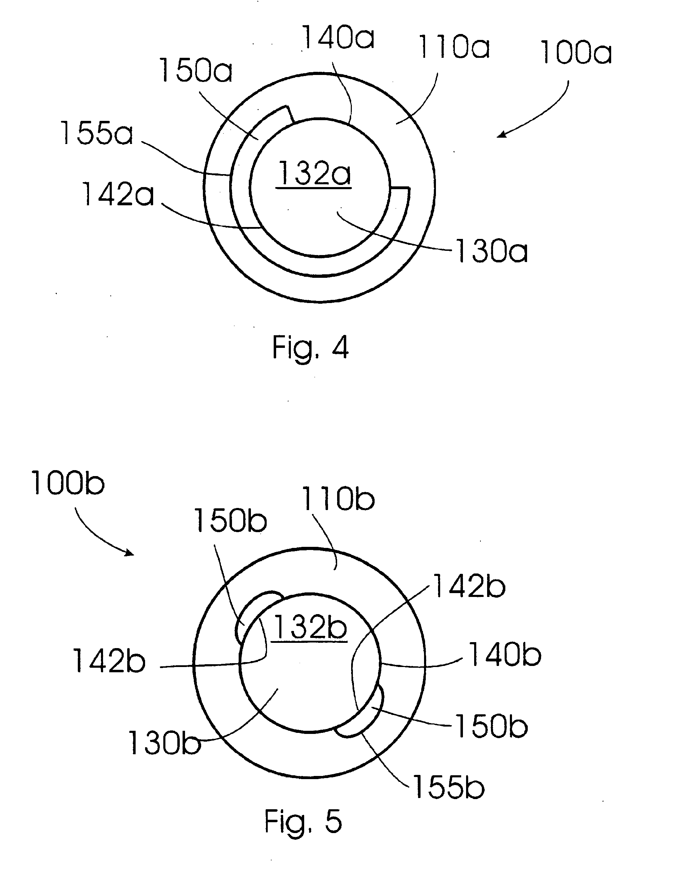

In Figur 4 ist eine andere Ausführungsform der vorliegenden Erfindung in einer schematischen Draufsicht auf eine brennraumseitige Oberfläche 110a mit einer im Wesentlichen kreisförmigen Mulde 130a mit Muldenboden 132a gezeigt. Eine Ausbuchtung 150a mit einem Ausbuchtungsrand 155a ist an einem Abschnitt 142a des Muldenrandes 140a angeordnet. Im Vergleich zu Figur 2 wird deutlich, dass der Abschnitt 142a des Muldenrandes 140, von dem sich die Ausbuchtung 150a aus erstreckt, ein größeres Kreisbogensegment aufweist, sowohl prozentual als auch absolut, als der Abschnitt in der in Fig. 2 gezeigten Ausführungsform.

Figur 5 zeigt die schematische Draufsicht auf eine brennraumseitige Oberfläche 110b eines Kolbens 100b nach weiteren Ausführungsformen der vorliegenden Erfindung. Die brennraumseitige Oberfläche 110a weist die eine im Wesentlichen kreisförmige Mulde 130b mit einem Muldenrand 140b auf, von dem sich zwei Ausbuchtungen 150b mit einer im Wesentlichen gleichen Form und Größe aus erstrecken. Die Ausbuchtungen 150b weisen jeweils einen Ausbuchtungsrand 155b auf. In Fig. 5 erstrecken sich die Ausbuchtungen von im Wesentlichen gegenüberliegend Abschnitten 142b des Muldenrands 140b

In Figur 5 sind zwei Ausbuchtungen 150b gleichmäßig über den Muldenrand 140b der Mulde 130b verteilt. In anderen Ausführungsformen der vorliegenden Erfindung können die Ausbuchtungen 150b auch unregelmäßig über den Muldenrand 140b verteilt sein.

In einigen Ausführungsformen der vorliegenden Erfindung, die mit anderen Ausführungsformen kombiniert werden können, weisen bei einer Mehrzahl von Ausbuchtungen die einzelnen Ausbuchtungen eine unterschiedliche Form auf. Zum Beispiel können die unterschiedlichen Ausbuchtungen in der Größe variieren, aber im Wesentlichen die gleiche Geometrie aufweisen. Nach anderen Ausführungsformen ist die Größe der einzelnen Ausbuchtungen gleich oder zumindest ähnlich, aber die Geometrie unterschiedlich.

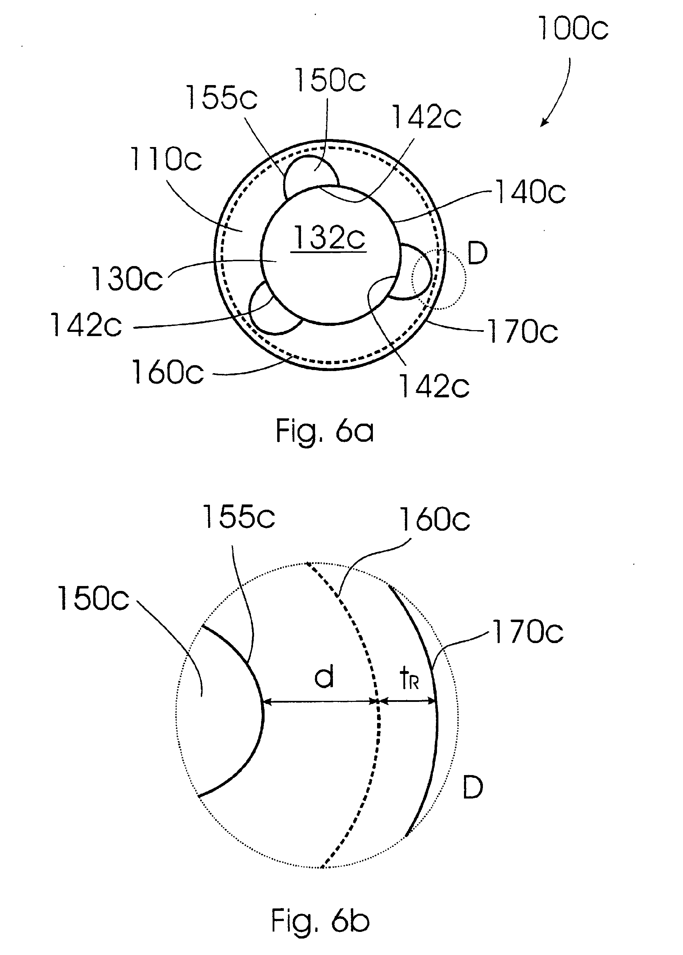

Figur 6a zeigt eine weitere Ausführungsform eines Kolbens 100c, der eine im Wesentlichen kreisförmige Mulde 130c mit einem Muldenrand 140c und drei sich von Abschnitten 142c des Muldenrands 140c aus erstreckende Ausbuchtungen 150c auf einer brennraumseitigen Oberfläche 110c des Kolbens 100c aufweist. Weiterhin ist in Figur 6a mit der gestrichelten Linie ein Innenkreis 160c von einer Ringnut zu sehen, wie sie zum Beispiel in Figur 1a dargestellt sind. Figur 6b zeigt eine Detailansicht des Abschnitts D aus Fig. 6a. Fig. 6b zeigt die Tiefe t_{R} einer Ringnut als Abstand des Innenkreises 160c zum äußeren Rand 170c der brennraumseitigen Oberfläche 110c, wobei der äußere Rand 170c im Wesentlichen der Mantelfläche 106 des Kolbens 110c entspricht.

Nach weiteren Ausführungsformen kann bei einem Kolben mit Ringträger 107 (wie z.B. in Fig. 1c gezeigt) die Tiefe t_{R} die Tiefe des Ringträgers in radialer Richtung bezeichnen. In einem solchen Fall ist der theoretische Innenkreis 160c die Hinterkante des Ringträgers 107 in radialer Richtung.

In einer Ausführungsform ist die Ringnut in einem Abstand d_{Nut} (Siehe Fig. 3) von der brennraumseitigen Oberfläche 110c des Kolbens 100c angeordnet, wobei der Abstand gleich oder geringer ist als die Tiefe tₐᵤₛ der Aussparung. Folglich ist dann die Ausbuchtung 150c in radialer Richtung zum äußeren Rand 170c hin durch den Innenkreis 160c der Ringnuten beschränkt. Beispielsweise befindet sich in der Detailansicht von Fig. 6b zwischen dem Ausbuchtungsrand 155c und dem Innenkreis 160c ein Abstand d. Dieser Abstand d kann abhängig von dem Durchmesser der brennraumseitigen Oberfläche 110c, der Geometrie der Ausbuchtung 150c, der Tiefe der Ringnut t_{R}, der Tiefe des Ringträgers t_{R} oder dem Material sein, mit dem die Ringnut verstärkt ist.

Anders ausgedrückt ist die Ausbuchtung oder die Ausbuchtungen 150c so ausgelegt, dass sie die Festigkeit und die Funktionalität der Ringnut und/oder des Ringträgers nicht beeinflussen. Beispielsweise könnte bei einer Überschneidung des Ausbuchtungsrandes 155c der Ausbuchtung 150 und dem Innenkreis 160c der Ringnut oder des Ringträgers 107 die Geometrie oder das Material der Ringnut oder des Ringträgers 107 beschädigt werden, so dass die Lebenszeit des Kolbens verkürzt würde. Durch einen geeignet gewählten Abstand d wird eine Beschädigung verhindert und die Funktionalität der Ringnut und/oder des Ringträgers weiterhin gewährleistet.

Dabei hat es sich gezeigt, dass eine möglichst große Ausdehnung der Ausbuchtungen in radialer Richtung vorteilhaft ist. Das heißt, der Abstand d sollte wegen der Funktionalität der Ausbuchtung 150 möglichst klein sein, aber groß genug um eine Beschädigung der Ringnut, bzw. des Ringträgermaterials zu vermeiden.

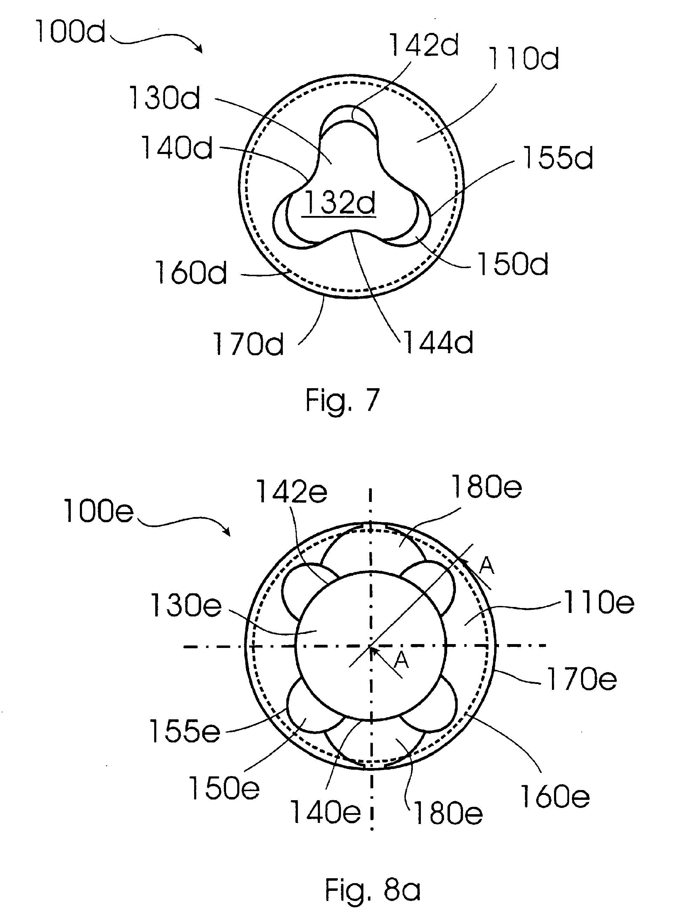

Figur 7 zeigt die schematische Draufsicht auf eine brennraumseitige Oberfläche 110d eines Kolbens 100d gemäß einer weiteren Ausführungsform. Die Mulde 130d weist einen wellenförmigen Muldenrand 140d auf, wobei die Wellenform einer Kreisform überlagert ist. Der Muldenrand 140d weist beispielsweise drei Wellenberge 142d und drei Wellentäler 144d auf. In dieser Ausführungsform orientieren sich drei Ausbuchtungen 150d mit einem Ausbuchtungsrand 155d an der Geometrie der Mulde 130d beziehungsweise des Muldenrands 140d, so dass die Ausbuchtungen 150d d.h. die Form der Ausbuchtungsränder 155d, der Form des Muldenrandes 140d nachempfunden ist und sie sich von den Wellenbergen 142d radial nach außen erstrecken. Nach anderen Ausführungsformen können die Ausbuchtungen 150d aber auch konträr zur Geometrie der Muldenrands 130d angeordnet sein, d.h. eine Ausbuchtung 150d kann an einer Stelle angeordnet sein, an der die Mulde 130d bzw. der Muldenrand 140d eine Einbuchtung bzw. ein Wellental 144d aufweist.

Figur 8a zeigt eine schematische Draufsicht der brennraumseitigen Oberfläche 110e einer weiteren Ausführungsformen eines Kolbens 100e der vorliegenden Erfindung. Die brennraumseitige Oberfläche 110e weist eine im Wesentlichen kreisförmige Mulde 130e auf, die konzentrisch zum äußeren Rand 170e der brennraumseitigen Oberfläche bzw. zur Mantelfläche 106e des Kolbens ausgebildet ist. Weiterhin zeigt die Ausführungsform aus Figur 8a vier Ausbuchtungen 150e mit jeweils einem Ausbuchtungsrand 155e, die sich von dem Muldenrand 140e, insbesondere von Abschnitten 142e des Muldenrands aus radial nach außen erstrecken. Beispielhaft sind zusätzlich zwei, insbesondere flache, Taschen 180e zur Aufnahme der in den Brennraum hineinragenden Ventile dargestellt. Im Fall eines 4 Ventil Zylinderkopfes müssen naturgemäß 4 solcher Freistellungen vorhanden sein.

Der Ausdruck "flach" bezeichnet hier eine Tiefe, die kleiner ist als die Tiefe der Ausbuchtungen tₐᵤₛ. Zum Beispiel kann die Tiefe der Taschen 180e nur 10% oder 20% der Tiefe der Ausbuchtungen betragen.

Wie schon Figur 6a und 6b, zeigt auch Figur 8a den Innenkreis 160e einer Ringnut 120e. In einer Ausführungsform mit Ringträger bezeichnet der Innenkreis 160e die Hinterkante eines Ringträgers 107e in radialer Richtung nach innen.

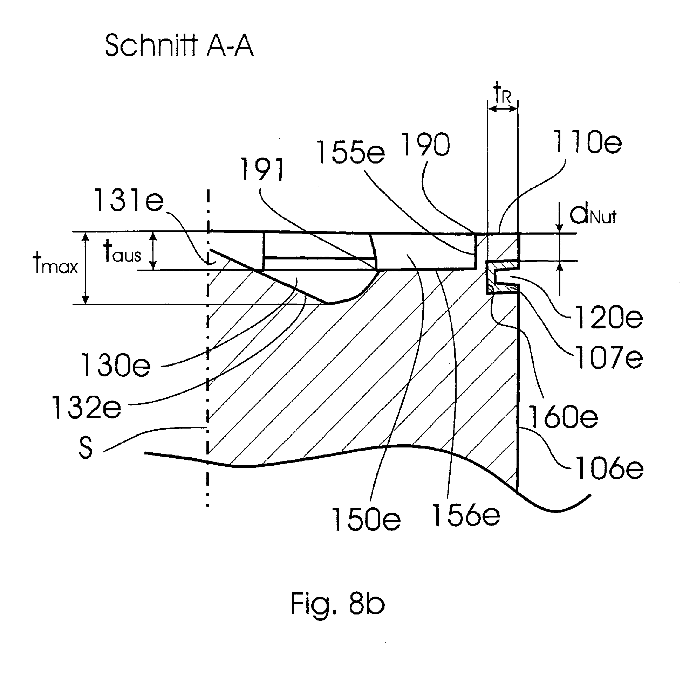

Figur 8b zeigt den vergrößerten Schnitt A-A aus der Figur 8a. Die Mulde 130e weist einen Muldenboden 132e auf, der am Rand in den Muldenrand 140e übergeht. Von dem Muldenrand 140e aus erstreckt sich dann die Ausbuchtung 150e. In der Mantelfläche 106e des Kolbens 100e ist beispielhaft eine Ringnut 120e mit einem Ringträger 107e eingebracht.

Gemäß einer Ausführungsform der vorliegenden Erfindung weist die Ausbuchtung 150e eine Tiefe tₐᵤₛ in axialer Richtung des Kolbens 100e gegenüber der brennraumseitigen Oberfläche 110e und die Mulde eine maximale Tiefe tₘₐₓ ebenfalls in axialer Richtung des Kolbens 100e auf. Die Tiefen tₐᵤₛ und tₘₐₓ können jeweils von der brennraumseitigen Oberfläche 110e aus gemessen werden. Die Tiefe tₐᵤₛ der Ausbuchtung 150e ist geringer als die maximale Tiefe tₘₐₓ der Mulde.

Gemäß einigen Ausführungsformen der vorliegenden Erfindung, die mit anderen Ausführungsformen kombiniert werden können, beträgt die Tiefe tₐᵤₛ der Ausbuchtung 150 zwischen 30% und 70%, insbesondere zwischen 40% und 60% und bevorzugterweise zwischen 45% und 55% der maximalen Tiefe tₘₐₓ der Mulde in axialer Richtung des Kolbens.

Zwischen der Oberfläche 110e und der Ausbuchtung 150e bzw. dem Ausbuchtungsrand 155e wird eine erste Beschleunigungskante 190, und zwischen einem Ausbuchtungsboden 156e und dem Muldenrand 140e wird eine zweite Beschleunigungskante gebildet. Folglich entstehen durch das Verhältnis der Tiefe der Ausbuchtung 150e zur Tiefe der Mulde 130e zwei Beschleunigungskanten 190, 191. Bei der Einspritzung strömt ein Kraftstoff oder ein Kraftstoffgemisch über die Beschleunigungskanten 190, 191. Dabei wird der Kraftstoff durch die Geometrieaufweitung der Ausbuchtung 150e beschleunigt. Dies beschleunigt den Einspritzvorgang und sorgt für eine schnelle Verbrennung.

Da die Ausbuchtungen 150e abschnittsweise am Muldenrand liegen, treten unterschiedliche Geschwindigkeiten in den Abschnitten der Mulde in der brennraumseitigen Oberfläche auf, an die eine Ausbuchtung angrenzt im Vergleich zu den Abschnitten des Muldenrands, an die keine Ausbuchtung angrenzt, auch "Stege" genannt. Die unterschiedlichen Geschwindigkeiten im Brennraum an Stellen mit Ausbuchtung und an Stellen, an denen sich Stege befinden, erhöht die Turbulenz im Brennraum und führt somit zu einer besseren Durchmischung des Kraftstoffes oder des Kraftstoffgemisches mit der Luft im Brennraum vor der Verbrennung.

Die erhöhte Turbulenz ermöglicht eine bessere Verdichtung im Vergleich zu brennraumseitigen Oberflächen ohne Ausbuchtungen nach Ausführungsformen der vorliegenden Erfindung und bewirkt dadurch eine schnellere, effizientere und homogene Verbrennung bewirken.

Typischerweise weisen die Beschleunigungskanten 190, 191, oder zumindest die Beschleunigungskante 191 am Übergang von einer Tiefenebene zur anderen eine scharfkantige Geometrie auf. Am Beispiel der Beschleunigungskante 190 ist das der Übergang von der brennraumseitigen Oberfläche 110e zum Ausbuchtungsrand 155e. Der Begriff "scharfkantig" bezieht sich hierbei auf eine Geometrie, die im Wesentlichen nicht verrundet ist. In diesem Zusammenhang wird eine Verrundung bis zu 0.3mm noch als "scharfkantig" bezeichnet.

Durch scharfkantige Beschleunigungskanten werden die obigen Effekte wie verstärkte Beschleunigung und Erhöhung der Turbulenz zusätzlich verstärkt. Die Kanten sind typischerweise mit einem Radius zwischen 0.1mm und 0.3mm verrundet, um eine Beschädigung der Kanten durch die hohen Temperaturen im Brennraum zu verhindern. Eine nicht verrundete Kante würde bei den Temperaturen während des Verbrennungsvorgangs zu glühen beginnen und evtl. Zündungen auslösen, die den Kraftstoff oder das Kraftstoffgemisch vorzeitig zünden können und somit die Effizienz verringern.

Nach weiteren Ausführungsformen kann die Gestaltung der Ausbuchtung 150e wie im Schnitt A-A sein, d.h. mit einem ebenen Ausbuchtungsboden 156e. Nach anderen Ausführungsformen kann der Ausbuchtungsboden 156e auch ein bestimmtes Profil aufweisen. Dieses Profil kann z.B. einen oder mehrere Kreisbogensegmente, Stufen, weitere Beschleunigungskanten, weitere Ausbuchtungen und dergleichen enthalten. Ist der Boden 156e der Ausbuchtung 150e profiliert, so wird die Tiefe tₐᵤₛ durch die maximale Tiefe der Ausbuchtung 150e in axialer Richtung definiert.

Auch der Muldenboden 132e kann eben oder profiliert sein. In der Ausführungsform der Erfindung, die in Figur 8b gezeigt ist, weist der Muldenboden 132e einen Innenkegel 131e auf, der vorzugsweise symmetrisch zur Achse S ausgebildet ist.

Gemäß weiteren Ausführungsformen der vorliegenden Erfindung, die mit anderen Ausführungsformen kombiniert werden können, weist die Mulde 130e in der Mitte, insbesondere zur Symmetrieachse S hin, einen Bereich auf, der eine geringere Tiefe als die maximale Tiefe tₘₐₓ der Mulde aufweist. Mit anderen Worten ist die Mulde zur Mitte des Kolbens hin flacher als zum äußeren Muldenrand 140e hin. Zum Beispiel kann, wie in Figur 8b gezeigt, die Mulde 130e in der Mitte kegelförmig sein, sie kann aber auch die Form eines abgeflachten oder abgerundeten Kegels haben. Nach weiteren Ausführungsformen kann die Mulde 130e zur Mitte hin auch eine kugelabschnittsförmige Abflachung aufweisen. Nach einem anderen Aspekt der vorliegenden Erfindung kann das Profil der Mulde 130e auch ein oder mehrere Kreissegmente, Stufen oder Beschleunigungskanten aufweisen.

Weitere Vorteile von Ausführungsformen der vorliegenden Erfindung können sich im Bezug auf den Drall des Kraftstoffluftgemisches ergeben. Zum Beispiel wird bei 4 Ventilzylinderköpfen moderner Bauart der Einlassdrall moderat gehalten. Die Düsen- Einspritzgeometrie kann zur Verbesserung der Gemischbildung auf 7 bis 9 Lochdüsen optimiert werden. Typischerweise wird hierbei auf herkömmliche Weise ein Drall durch die Einlasskanäle, d.h. durch sogenannte Tangential- und Spiralkanäle erzeugt. Die typische Drallzahl kann bei dieser Auslegung bei 1,3 bis 1,6 liegen. Bei der Konvertierung dieser Auslegung auf einen Ottomotor mit direkter Zündung kann sich jedoch das Problem ergeben, dass die Flammenausbreitung in der Umfangsrichtung des Kolbens zu gering ist und damit die Verbrennung langsamer als gewünscht abläuft.

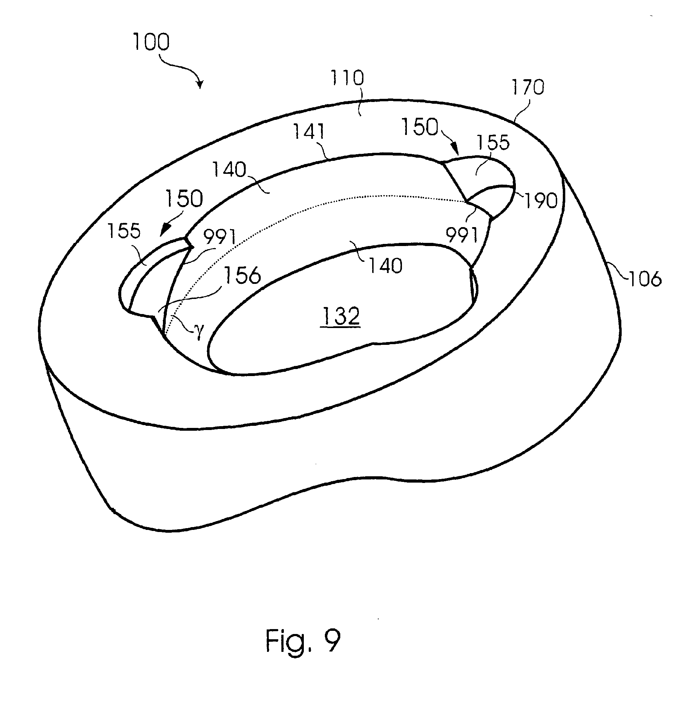

Daher kann gemäß weiteren Ausführungsformen der Erfindung, die mit den anderen hierin beschriebenen Ausführungsformen kombiniert werden können, durch die Gestaltung des Brennraums die Umfangsgeschwindigkeit der Strömung um Brennraum vergrößert werden. Hierzu werden gemäß dieser Ausführungsformen die Ausbuchtung oder die Ausbuchtungen geneigt bzw. gekippt. Figur 9 zeigt einen Ausschnitt eines derart ausgebildeten Kolbens 100 und illustriert eine Ankippung der Ausbuchtung, die separat oder zusammen mit den anderen Ausführungsformen der Erfindung kombiniert werden können.

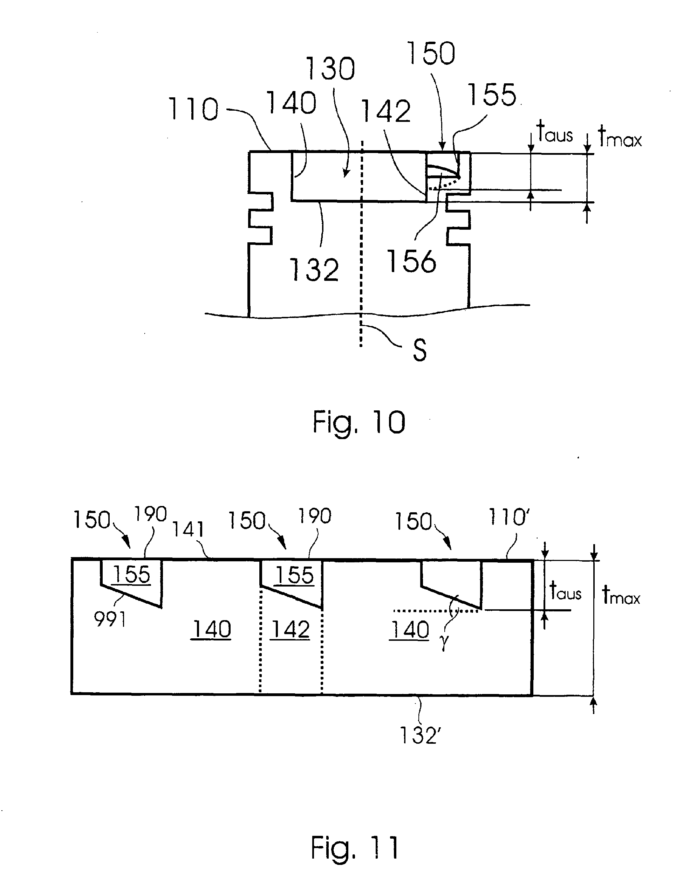

Figur 9 zeigt eine schematische perspektivische Ansicht eines brennraumseitigen Abschnitts eine Kolbens 100. Dieser weist eine brennraumseitige Oberfläche 110 auf. Die brennraumseitige Oberfläche beinhaltet eine im Wesentlichen kreisförmige Mulde, die in Figur 9 exemplarisch konzentrisch zum äußeren Rand 170 der brennraumseitigen Oberfläche bzw. zur Mantelfläche 106 des Kolbens ausgebildet ist. Weiterhin zeigt Figur 9 drei Ausbuchtungen 150 mit jeweils einem Ausbuchtungsrand 155 und einem Ausbuchtungsboden 156, die sich von dem Muldenrand 140, insbesondere von Abschnitten 142 (siehe Figur 11) des Muldenrands aus radial nach außen erstrecken.

Gemäß typischen Ausführungsformen hat die Mulde einen Muldenboden 132, der am Rand in den Muldenrand 140 übergeht. Der Muldenboden kann wie gemäß einem der oben beschriebenen Ausführungsformen ausgebildet sein. In Kombination mit den in Fig. 9 gezeigten geneigten Ausbuchtungen, ist insbesondere ein Muldenboden 132 mit einem in einem inneren Bereich angeordneten Innenkegel vorteilhaft, wie er zum Beispiel in Fig. 8 dargestellt ist. Von dem Muldenrand 140 aus erstreckt sich dann die Ausbuchtung 150.

Wie in Figur 9 dargestellt erstreckt sich in Bereichen ohne Ausbuchtung der Muldenrand an den Steg d.h. die Kante 141 in die brennraumseitigen Oberfläche 110. In Bereichen mit Ausbuchtung 150 (siehe Bezugszeichen 142 in Figur 11) geht der Muldenrand 140 an der Beschleunigungskante 991 in den Ausbuchtungsboden 156 über, der wiederum in den Ausbuchtungsrand 155 mündet. Der Ausbuchtungsrand bildet mit der brennraumseitigen Oberfläche 110 die weitere Beschleunigungskante 190.

Gemäß einigen Ausführungsformen der Erfindung, ist die Beschleunigungskante 991 bzw. der Ausbuchtungsboden 156 gekippt. Dies ist in Figur 9 durch den Winkel γ angezeigt, der zwischen der Beschleunigungskante 991 und der gepunkteten Hilfslinie, die eine Ebene senkrecht zur Kolbenachse der größten Tiefe des Ausbuchtungsbodens 156 illustriert, eingezeichnet ist. Im Bezug auf die Beschleunigungskante 991 ergibt sich der Winkel γ durch eine beliebige Tangente an die Beschleunigungskante 991 und die durch die gepunktete Hilfslinie aufgespannte Ebene, d.h. eine ebene senkrecht zur Kolbenachse. Analog ergibt sich der Winkel γ durch den Schnitt dieser Ebene mit der durch den Ausbuchtungsboden 156 gebildeten Ebene.

Weitere alternative Ausführungsformen können dadurch ausgebildet werden, dass bei einem Kolben mit 2 oder mehr Ausbuchtungen der Neigungswinkel γ für alle Ausbuchtungen identisch ist. Alternative hierzu kann der Neigungswinkel bzw. der Anstellwinkel der Ausbuchtungen für einzelne Ausbuchtungen oder für Gruppen von Ausbuchten variiert werden, um die Kontrolle des Dralls bzw. der Umfangsgeschwindigkeit der Strömung zu verbessern. Eine solche Variation kann u.a. mit einer durch eine einer Zündkerzenposition korrespondieren Lage eine Ausbuchtung korrelieren.

Insbesondere im Bezug auf die Kolbenwinkelkoordinate relativ zu einer Zündkerzenposition im Motor können unterschiedliche Ausführungsformen auch folgendermaßen ausgebildet werden. Auf der einen Seite - wie in Figur 9 dargestellt, können die drei Ausbuchtungen 150 gleichmäßig über den Muldenrand 140 der Mulde verteilt sein bzw. die Stege 141 zwischen den jeweiligen Ausbuchtungen dieselbe Länge haben. Auf der anderen Seite können in anderen Ausführungsformen der vorliegenden Erfindung die Ausbuchtungen 150 auch unregelmäßig über den Muldenrand 140 verteilt sein. Eine unregelmäßige Verteilung, d.h. variierende Steglängen, kann z.B. zu einer Verbesserung der Strömungsverhältnisse im Bereich der Zündkerze führen. Zum Beispiel können bei 3, 4 oder 5 Ausbuchtungen oder Ausnehmungen im Brennraum, die Ausbuchtungen oder Ausnehmungen in knapperem Abstand (schmale Stege) angeordnet sein und ein deutlich größerer Abstand (breiterer Steg), zum Beispiel ein Steg mit einer mindestens um 50% größeren Länge im Vergleich zu den schmalen Stegen, kann zwischen der vierten und ersten Ausbuchtung ausgebildet sein.

Wie in Figur 10 dargestellt, die weist die Ausbuchtung 150 eine maximale Tiefe tₐᵤₛ in axialer Richtung des Kolbens 100 gegenüber der brennraumseitigen Oberfläche 110 und die Mulde eine maximale Tiefe tₘₐₓ ebenfalls in axialer Richtung des Kolbens 100 auf. Die Tiefen tₐᵤₛ und tₘₐₓ können jeweils von der brennraumseitigen Oberfläche 110 aus gemessen werden. Die maximale Tiefe tₐᵤₛ der Ausbuchtung 150 ist geringer als die maximale Tiefe tₘₐₓ der Mulde.

Gemäß einigen Ausführungsformen der vorliegenden Erfindung, die mit anderen Ausführungsformen kombiniert werden können, beträgt die maximale Tiefe tₐᵤₛ der Ausbuchtung 150 zwischen 30% und 70%, insbesondere zwischen 40% und 60% und bevorzugter Weise zwischen 45% und 55% der maximalen Tiefe tₘₐₓ der Mulde in axialer Richtung des Kolbens.

Figur 10 zeigt weiterhin eine schematische Ansicht eines mit gekippten Ausbuchtungen 150 ausgebildeten Kolbens. Die Oberfläche 110 weist eine Mulde 130 mit einem Muldenrand 140 und eine sich von dem Muldenrand aus erstreckende Ausbuchtung 150 mit einem Ausbuchtungsrand 155 auf. Der Ausbuchtungsboden 156 ist hier durch die Neigung des Bodens relativ zu einer senkrecht zur Achse S stehenden Ebene teilweise sichtbar dargestellt. Der an sich in der Darstellung nicht sichtbare teile des Ausbuchtungsbodens ist durch die gepunktete Linie angedeutet. Gemäß Ausführungsformen der vorliegenden Erfindung, die mit anderen Ausführungsformen kombiniert werden können, kann die Form der Ausbuchtung im Wesentlichen vorzugsweise kreisförmig, kreissegmentförmig, oder elliptisch sein, oder jede andere Form aufweisen. Wie in Figur 10 dargestellt beinhaltet die Mulde 130 einen Muldenboden 132, wobei der Muldenboden 132 eine Tiefe tₘₐₓ gegenüber der brennraumseitigen Oberfläche 110 aufweist. Die Ausbuchtung 150 mit dem Ausbuchtungsboden 156, die sich von dem Muldenrand 140, insbesondere von einem Abschnitt 142 des Muldenrandes 140 aus erstreckt, weist hingegen eine geringere maximale Tiefe tₐᵤₛ gegenüber der brennraumseitigen Oberfläche auf. Dabei ist die geringere Tiefe tₐᵤₛ als maximale Tiefe des Ausbuchtungsbodens zu verstehen.

Ein Abschnitt eines Muldenrandes ist in diesem Zusammenhang als ein Teil oder ein Teilbereich des Muldenrandes zu verstehen. Ist der Muldenrand zum Beispiel kreisförmig, kann der Abschnitt 142 ein Kreisbogen mit einem beliebigen Winkel α sein. Ein Abschnitt kann jedoch auch über einen Anteil des Umfanges des Muldenrandes definiert werden. Ist die Mulde beispielsweise ellipsenförmig, kann eine Ausbuchtung zum Beispiel an 25% des Muldenrands angrenzen, der dem Umfang der Ellipse entspricht. Typischerweise kann auch die Muldenform variieren, je nach Anwendungs- und Einsatzgebiet des entsprechenden Kolbens. Gemäß einigen der hier dargestellten Ausführungsformen der Erfindung ist die Mulde 130 beispielweise kreisförmig, sie kann aber auch im Wesentlichen im Wesentlichen ellipsenförmig sein oder eine andere Form aufweisen.

Zur weiteren Klarstellung illustriert Figur 11 die Neigung oder Ankippung der Ausbuchtungen in einer anderen Darstellung. Hierbei handelt es sich um eine Projektion des Umfangs aus Sicht der Achse S in einen Blattebene. Die horizontale Ausdehnung in Fig. 11 kann somit einem Winkel von 0° bis 360° zugeordnet werden. Zwischen der Oberfläche bzw. der Kante 110' und der Ausbuchtung 150 bzw. dem Ausbuchtungsrand 155 wird eine erste Beschleunigungskante 190, und zwischen einem Ausbuchtungsboden und dem Muldenrand 140/142 wird eine zweite Beschleunigungskante 991 gebildet. Folglich entstehen durch das Verhältnis der Tiefe der Ausbuchtung 150 zur Tiefe der Mulde bis zum Muldenboden bzw. der zugehörigen Kante 132' zwei Beschleunigungskanten 190, 991. Bei der Einspritzung strömt ein Kraftstoff oder ein Kraftstoffgemisch über die Beschleunigungskanten 190, 991. Dabei wird der Kraftstoff durch die Geometrieaufweitung der Ausbuchtung 150 beschleunigt. Dies beschleunigt den Einspritzvorgang und sorgt für eine schnelle Verbrennung. Ferner wird durch die Neigung der Ausbuchtung 150 die Umfangsgeschwindigkeit der Strömung also des Kraftstoffes bzw. des Kraftstoffgemischs angehoben. Dies wird insbesondere wirksam wenn der Kolben sich zum oberen Totpunkt vor dem Start der Verbrennung hin bewegt.

Gemäß typischen Ausführungsformen der Erfindung kann der Winkel γ, d.h. der Neigungswinkel der Ausbuchtung 150 mindestens 3° sein Insbesondere kann der Ankippwinkel der Ausbuchtung mindestens 4°, z.B. zwischen 4° und 20°, insbesondere zwischen 5° und 15° sein. Je nach den Flächenverhältnissen zwischen der Quetschfläche (Squishband), der Geometrie der Ausnehmung, dem Anstellwinkel und dem Ausgangsdrall kann der Drall auf für eine Auslegung eines Hochturbulenzbrennverfahrens angehoben werden. In Figur 11 ist dieser Winkel ebenfalls durch γ im Bezug auf eine zur Kolbenachse senkrechte Ebene (horizontale Linie in Fig. 11) dargestellt.

Wie in Figur 11 zu sehen ist die Kante 991 des Ausbuchtungsrandes 155, die auch als eine Beschleunigungskante bezeichnet werden kann, an einem Abschnitt 142 des Muldenrandes 140 angeordnet.

Da die Ausbuchtungen 150 abschnittsweise am Muldenrand liegen, treten unterschiedliche Geschwindigkeiten in den Abschnitten der Mulde in der brennraumseitigen Oberfläche auf, an die eine Ausbuchtung angrenzt im Vergleich zu den Abschnitten des Muldenrands, an die keine Ausbuchtung angrenzt, auch "Stege" 141 genannt. Die unterschiedlichen Geschwindigkeiten im Brennraum an Stellen mit Ausbuchtung und an Stellen, an denen sich Stege befinden, erhöht die Turbulenz im Brennraum und führt somit zu einer besseren Durchmischung des Kraftstoffes oder des Kraftstoffgemisches mit der Luft im Brennraum vor der Verbrennung. Die erhöhte Turbulenz ermöglicht eine bessere Verdichtung im Vergleich zu brennraumseitigen Oberflächen ohne Ausbuchtungen nach Ausführungsformen der vorliegenden Erfindung und bewirkt dadurch eine schnellere, effizientere und homogene Verbrennung bewirken.

Darüber hinaus führt die Ankippung zu Ausbuchtungen, d.h. der Bodenfläche der Ausbuchtungen zu einer gezielten Erhöhung des Dralls. Daher kann zum Beispiel auch bei einer direkten Zündung die Flammenausbreitung in der Umfangsrichtung des Kolbens ausreichend sein um die Verbrennung in einer gewünschten Geschwindigkeit zu ermöglichen.

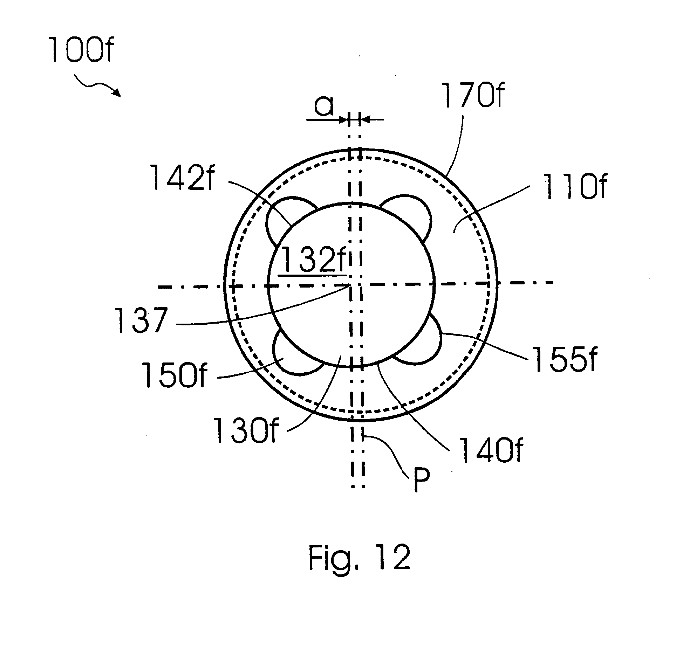

In Figur 12 ist eine weitere Ausführungsform der vorliegenden Erfindung dargestellt. Zu sehen ist, ähnlich wie in Figur 8a eine schematische Draufsicht einer brennraumseitigen Oberfläche 110f eines Kolbens 100f. Beispielhaft sind vier Ausbuchtungen 150f gezeigt, die sich von Abschnitten 142f des Muldenrandes 140f aus erstrecken. Die Mulde 130f weist einen im Wesentliche kreisförmige Muldenrand 140f auf. Die Mitte der Mulde 137 ist nicht auf der Achse P des Kolbens angeordnet, die die Mitte des Außenrandes 170f des Kolbens umfasst. Das heißt, dass die Mulde asymmetrisch, insbesondere exzentrisch zur Achse P angeordnet ist. Der Versatz der Muldenmitte 137, zur Achse P des Kolbens 100f ist durch einen Abstand a kenntlich gemacht. Typischerweise weist der Abstand a einen Wert im Bereich weniger Millimeter auf, zum Beispiel zwischen einem und fünf Millimeter und bevorzugterweise zwischen zwei und drei Millimeter.

Nach weiteren Ausführungsformen der vorliegenden Erfindung, weisen der Abschnitt des Muldenrandes 142, an den eine Ausbuchtung angrenzt und der Muldenrand 140f ein definiertes Verhältnis zueinander auf. Wie aus den vorhergehenden Figuren hervorgeht, kann dieses Verhältnis stark variieren. Zum Beispiel kann in Figur 4 das Verhältnis des Abschnittes 142 zum Muldenrand 140 mit ca. 70% sehr hoch sein, oder wie in Figur 5 gezeigt, das Verhältnis aller Abschnitte 142b des Muldenrandes 140b zum Muldenrand 140 mit ca. 30% relativ gering sein.

Typischerweise liegt das Verhältnis eines Abschnittes des Muldenrandes, an dem eine Ausbuchtung angrenzt zum gesamten Muldenrand zwischen 10% und 70%, insbesondere zwischen 15% und 50% und bevorzugterweise zwischen 20% und 30%.

Im Fall, dass mehrere Ausbuchtungen geformt sind, liegt das Verhältnis der Summe aller Abschnitte, an denen Ausbuchtungen anliegen zum gesamten Muldenrand, abhängig von der Anzahl der Ausbuchtungen, zwischen 30% und 70%, insbesondere zwischen 40% und 60% und bevorzugterweise zwischen 45% und 55%.

In den Zeichnungen sind beispielhaft eine, zwei, drei oder vier Ausbuchtungen gezeigt. Nach weiteren Ausführungsformen der vorliegenden Erfindung kann allerdings die Anzahl der Ausbuchtungen auch höher als vier sein, zum Beispiel fünf, acht oder sogar höher als acht.

nicht erfindungsgemäβße Anwendungen für einen Kolben mit der oben beschriebenen Gestaltung der brennraumseitigen Oberfläche sind zum Beispiel selbstzündende Motoren. Typischerweise können solche Kolben in Gasmotoren eingesetzt werden. Durch die Verwendung von Kolben mit der in dieser Anmeldung mithilfe der Figuren gezeigten Geometrie kann in einem Gasmotor beispielsweise die Verdichtung von 11:1 auf 13,5:1 erhöht werden, im Vergleich zu der Verdichtung eines Motors mit bekannter Kolbengeometrie.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Ottomotor mit einem Kolben (100, 100a-100f), wobei der Kolben (100, 100a-100f) eine brennraumseitige Oberfläche (110, 110a-110f) aufweist, wobei in der Oberfläche:
eine Mulde (130, 130a-130f) mit einem Muldenrand (140, 140a-140f) und
einem Muldenboden (132, 132a-132f) angeordnet ist, wobei die Mulde eine maximale Tiefe tₘₐₓ in axialer Richtung des Kolbens gemessen von der brennraumseitigen Oberfläche aufweist,
wobei mindestens eine Ausbuchtung (150, 150a-150f) sich von einem Abschnitt des Muldenrandes (142, 142a-142f) aus erstreckt und eine maximale Tiefe tₐᵤₛ aufweist, wobei die Tiefe tₐᵤₛ der Ausbuchtung in axialer Richtung des Kolbens kleiner als die Tiefe der Mulde tₘₐₓ ist, wobei
die mindestens eine Ausbuchtung (150, 150a-f) einen Ausbuchtungsboden (156) umfasst, wobei der Ausbuchtungsboden oder die Kante (991) zwischen dem Muldenrand (140, 142) und der mindestens einen Ausbuchtung gegenüber einer Ebene senkrecht zur axialen Richtung des Kolbens um einen Neigungswinkel geneigt ist, **dadurch gekennzeichnet, dass** die maximale Tiefe der mindestens einen Ausbuchtung tₐᵤₛ zwischen 45% und 55% der maximalen Tiefe tₘₐₓ der Mulde erreicht und dass der Muldenboden (132e) in radialer Richtung zur Mitte des Muldenbodens hin weniger tief ist als in radialer Richtung zum äußeren Muldenrand (140e) hin.

2. Ottomotor nach Anspruch 1, wobei der Kolben mindestens zwei Ausbuchtungen, insbesondere mindestens drei Ausbuchtungen, aufweist.

3. Ottomotor nach einem der vorangehenden Ansprüche, wobei der Muldenrand (140, 140a-140f) in der brennraumseitigen Oberfläche (110, 110a-110f) des Kolbens im Wesentlichen kreisförmig ist und wobei die Mulde (130, 130a-130e, 130f) im Wesentlichen konzentrisch oder im Wesentlichen exzentrisch zum äußeren Rand (170c-170e, 170f) der brennraumseitigen Oberfläche (110, 110a-110f) des Kolbens ausgebildet ist.

4. Ottomotor nach einem der vorangehenden Ansprüche, wobei der Kolben mindestens eine erste Beschleunigungskante (190) zwischen der brennraumseitigen Oberfläche (110, 110a-110f) und der mindestens einen Ausbuchtung (150, 150a-150f) und mindestens eine zweite Beschleunigungskante (191) zwischen der mindestens einen Ausbuchtung (150, 150a-150f) und der Mulde (130, 130a-130f) aufweist.

5. Ottomotor nach einem der vorangehenden Ansprüche, wobei der Muldenboden einen im Wesentlichen kegelförmigen Bereich aufweist.

6. Ottomotor nach Anspruch 5, wobei der im Wesentlichen kegelförmige Bereich der Mulde im Wesentlichen konzentrisch zur Mulde angeordnet ist.

7. Ottomotor nach einem der vorangehenden Ansprüche, wobei der Kolben (100, 100a-100f) eine Kolbenmantelfläche (106) aufweist, die eine Ringnut (120, 120e) umfasst, die dafür ausgelegt ist, einen Ringträger (107, 107e) mit einen Kolbenring aufzunehmen; und
wobei die mindestens eine Ausbuchtung (150, 150a-150f) in radialer Richtung durch die Ringnut begrenzt ist.

8. Ottomotor nach Anspruch 7, wobei die Ausbuchtung (150, 150a-150f), insbesondere ein Ausbuchtungsrand (155, 155a-155f), in einem Abstand von mind. 1 mm von dem Ringträger (107, 107e) der Ringnut (120, 120e) angeordnet ist.

9. Ottomotor nach einem der vorhergehenden Ansprüche, wobei die Form der mindestens einen Ausbuchtung im Wesentlichen kreissegmentförmig ist.

10. Ottomotor nach einem der vorangehenden Ansprüche, wobei der Ottomotor ein Gasmotor ist.

11. Ottomotor nach einem der vorangehenden Ansprüche, wobei das Verhältnis zwischen der Summe aller Abschnitte des Muldenrands (142, 142a-142f), von denen sich eine Ausbuchtung (150, 150a-150f) erstreckt und dem gesamten Muldenrand (140, 140a-140f) zwischen 30% und 70%, insbesondere zwischen 40% und 60%, bevorzugterweise zwischen 45% und 55% liegt.

12. Ottomotor nach einem der vorangehenden Ansprüche, wobei das Verhältnis zwischen einem Abschnitt des Muldenrands (142, 142a-142f), von dem sich eine Ausbuchtung (150, 150a-150f) erstreckt und dem gesamten Muldenrand (140, 140a-140f) zwischen 10% und 70%, insbesondere zwischen 15% und 50%, bevorzugterweise zwischen 20% und 30% liegt.

13. Ottomotor nach einem der vorhergehenden Ansprüche, wobei der Neigungswinkel mindestens 3°, insbesondere mindestens 5°, weiterhin insbesondere zwischen 4° und 20° ist.

14. Ottomotor nach einem der vorhergehenden Ansprüche, wobei der Kolben mindestens eine erste und eine zweite Ausbuchtung umfasst, und der Neigungswinkel der ersten Ausbuchtung gleich dem Neigungswinkel der zweiten Ausbuchtung ist.

15. Ottomotor nach einem der Ansprüche 2 bis 14, wobei die Mehrzahl von Ausbuchtungen ungleichmäßig entlang des Muldenrandes verteilt sind.

## Claims

1. Spark-ignition engine with one piston (100, 100a.-100F) in which the piston (100, 100a-100f) presents a combustion chamber side surface of (110, 110a-110f), in which, in that surface:
a hollow (130, 130a-130f) is arranged with a hollow rim (140, 140a-140f) and a hollow bottom (132, 132a-132f), in which the hollow presents a maximum depth tₘₐₓ measured in an axial direction of the piston from the combustion chamber side surface,
in which a minimum of one protrusion (150, 150a-150f) extends from a section of the hollow rim (142, 142a-142f) and presents a depth tₐᵤₛ, while, in the axial direction of the piston, the depth tₐᵤₛ of the protrusion is smaller than the depth of the hollow tₘₐₓ,
in which the minimum of one protrusion (150, 150a-f) comprises a protrusion bottom (156), in which the protrusion bottom or the edge (991) between the hollow rim (140, 142) and the minimum of one protrusion is inclined with regard to one plane vertically to the axial direction of the piston by an inclination angle, the depth of the minimum of one protrusion tₐᵤₛ reaches between 45% and 55% of the depth tₘₐₓ of the hollow, and the hollow bottom (132e) is less deep in radial direction towards the centre of the hollow bottom than in radial direction towards the outer hollow rim (140e).

2. Spark-ignition engine as claimed in claim 1 in which the piston presents a minimum of two protrusions and, in particular, a minimum of three protrusions.

3. Spark-ignition engine as claimed in any preceding claim in which the hollow rim (140, 140a-140f) in the combustion chamber side surface (110, 110a-110g) of the piston is essentially circular and in which the hollow (130, 130a-130e, 130f) is designed essentially in a concentric or essentially in an eccentric form towards the outside edge (170e-170e, 170f) of the combustion chamber side surface (110, 110a-110f) of the piston.

4. Spark-ignition engine as claimed in any of the preceding claims in which the piston presents at least one first acceleration edge (190) between the combustion chamber side surface (110, 110a-110f) and the minimum of one protrusion (150, 150a-150f) and at least a second acceleration edge (191) between the minimum of one protrusion (150, 150a-150f) and the hollow (130, 130a-130f).

5. Spark-ignition engine as claimed in any of the preceding claims in which the hollow bottom presents an essentially conical section.

6. Spark-ignition engine as claimed in claim 5, in which the essentially conical section of the hollow is arranged essentially in a concentric form towards the hollow.

7. Spark-ignition engine as claimed in any of the preceding claims, in which the piston (100, 100a-100f) presents a piston skirt surface (106) which comprises an annular slot (120, 120e) which is designed for receiving a ring carrier (107, 107e) with a piston ring; and
in which the minimum of one protrusion (150, 150a-150f) is limited by the annular slot in radial direction.

8. Spark-ignition engine as claimed in claim 7, in which the protrusion (150, 150a-150f), especially a protrusion rim (155, 155a-155f), is arranged at a distance of not less than 1 mm from the ring carrier (107, 107e) of the annular slot (120, 120e).

9. Spark-ignition engine as claimed in any preceding claim, in which the form of the minimum of one protrusion is essentially shaped like a circular segment.

10. Spark-ignition engine as claimed in any of the preceding claims, in which the spark-ignition engine is a gas engine.

11. Spark-ignition engine as claimed in any of the preceding claims, in which the proportion between the total of all portions of the hollow rim (142, 142a-142f), from which a protrusion (150, 150a-150f) extends, and the entire hollow rim (140, 140a-140f) is between 30% and 70%, especially between 40% and 60%, and preferably between 45% and 55%.

12. Spark-ignition engine as claimed in any of the preceding claims, in which the proportion between one portion of the hollow rim (142, 142a-142f), from which a protrusion (150, 150a-150f) extends, and the entire hollow rim (140, 140a-140f) is between 10% and 70%, especially between 15% and 50%, and preferably between 20% and 30%.

13. Spark-ignition engine as claimed in any of the preceding claims, in which the inclination angle is at least 3°, especially at least 5°, and furthermore, especially between 4° and 20°.

14. Spark-ignition engine as claimed in any of the preceding claims, in which the piston comprises at least a first and a second protrusions, and in which the inclination angle of the first protrusion is equal to the inclination angle of the second protrusion.

15. Spark-ignition engine as claimed in any claim 2 through 14, in which the majority of protrusions is distributed unevenly around the hollow rim.

## Revendications

1. Moteur à allumage commandé avec un piston (100, 100a-100f), ledit piston (100, 100a-100f) présentant une surface (110, 110a-110f) côté chambre de combustion, où est ménagée dans la surface :
une cavité (130, 130a-130f) pourvue d'un bord de cavité (140, 140a-140f) et d'un fond de cavité (132, 132a-132f), ladite cavité présentant une profondeur maximale tₘₐₓ dans la direction axiale du piston, mesurée depuis la surface côté chambre de combustion,
au moins une indentation (150, 150a-150f) s'étendant à partir d'un segment du bord de cavité (142, 142a-142f) et présentant une profondeur maximale tₐᵤₛ, ladite profondeur tₐᵤₛ de l'indentation étant inférieure à la profondeur de la cavité tₘₐₓ dans la direction axiale du piston, l'indentation ou les indentations (150, 150a-150f) comportant un fond d'indentation (156), ledit fond d'indentation ou le bord (991) entre le bord de cavité (140, 140a-140f) et l'indentation ou les indentations étant inclinés suivant un angle d'inclinaison par rapport à un plan perpendiculaire à la direction axiale du piston,
**caractérisé en ce que** la profondeur maximale de l'indentation ou des indentations tₐᵤₛ est comprise entre 45% et 55% de la profondeur maximale tₘₐₓ de la cavité, et **en ce que** le fond de cavité (132e) est moins profond dans la direction radiale vers le centre du fond de cavité que dans la direction radiale vers le bord extérieur de la cavité (140e).

2. Moteur à allumage commandé selon la revendication 1, où le piston comporte au moins deux indentations, en particulier au moins trois indentations.

3. Moteur à allumage commandé selon l'une des revendications précédentes, où le bord de cavité (140, 140a-140f) dans la surface (110, 110a-110f) côté chambre de combustion est sensiblement circulaire, et où la cavité (130, 130a-130e) est sensiblement concentrique, ou sensiblement excentrique au bord extérieur (170c-170e) de la surface (110, 110a-110f) côté chambre de combustion.

4. Moteur à allumage commandé selon l'une des revendications précédentes, où le piston comporte au moins un premier bord d'accélération (190) entre la surface (110, 110a-110f) côté chambre de combustion et l'indentation ou les indentations (150, 150a-150f) et au moins un deuxième bord d'accélération (191) entre l'indentation ou les indentations (150, 150a-150f) et la cavité (130, 130a-130f).

5. Moteur à allumage commandé selon l'une des revendications précédentes, où le fond de cavité présente une zone sensiblement conique.

6. Moteur à allumage commandé selon la revendication 5, où la zone sensiblement conique de la cavité est sensiblement concentrique à la cavité.

7. Moteur à allumage commandé selon l'une des revendications précédentes, où le piston (100, 100a-100f) présente une surface latérale de piston (106) comportant une rainure annulaire (120, 120e) prévue pour recevoir un support de segment (107, 107e) avec un segment de piston ; et
où l'indentation ou les indentations (150, 150a-150f) sont limitées par la rainure annulaire dans la direction radiale.

8. Moteur à allumage commandé selon la revendication 12, où l'indentation (150, 150a-150f), en particulier un bord d'indentation (155, 155a-155f), est disposée à un intervalle d'au moins 1 mm du support de segment (107, 107e) de la rainure annulaire (120, 120e).

9. Moteur à allumage commandé selon l'une des revendications précédentes, où la forme de l'indentation ou des indentations est sensiblement celle d'un segment de cercle.

10. Moteur à allumage commandé selon l'une des revendications précédentes, où le moteur à allumage commandé est un moteur à gaz.

11. Moteur à allumage commandé selon l'une des revendications précédentes, où le rapport entre la somme de tous les segments du bord de cavité (142, 142a-142f) à partir desquels s'étend une indentation (150, 150a-150f) et le bord de cavité (140, 140a-140f) dans son ensemble, est compris entre 30% et 70%, en particulier entre 40% et 60%, et de préférence entre 45% et 55%.

12. Moteur à allumage commandé selon l'une des revendications précédentes, où le rapport entre un segment du bord de cavité (142, 142a-142f) à partir duquel s'étend une indentation (150, 150a-150f) et le bord de cavité (140, 140a-140f) dans son ensemble est compris entre 10% et 70%, en particulier entre 15% et 50%, et de préférence entre 20% et 30%.

13. Moteur à allumage commandé selon l'une des revendications précédentes, où l'angle d'inclinaison est au moins égal à 3°, en particulier au moins égal à 5°, et tout particulièrement compris entre 4° et 20°.

14. Moteur à allumage commandé selon l'une des revendications précédentes, où le piston comporte au moins une première et une deuxième indentations, et où l'angle d'inclinaison de la première indentation est égal à l'angle d'inclinaison de la deuxième indentation.

15. Moteur à allumage commandé selon l'une des revendications 2 à 14, où la pluralité d'indentations est irrégulièrement répartie sur le bord de la cavité.
